# EUROPÄISCHE PATENTANMELDUNG

(11) **EP 2 857 149 A1**
(43) Veröffentlichungstag der Anmeldung: **08.04.2015**
(21) Anmeldenummer: 13187206.1
(22) Anmeldetag: 03.10.2013
(51) Int. Cl.: B25D 11/12, B25D 17/06, F16J 1/18, F16J 1/20

(54) **Handwerkzeugmaschine**

(71) Anmelder: HILTI Aktiengesellschaft, 9494 Schaan (LI)
(72) Erfinder: Geiger, Steffen, 80687 München (DE); Hammerstingl, Stefan, 81375 München (DE); Hartmann, Markus, 87665 Mauerstetten (DE); Manschitz, Erwin, 82110 Germering (DE)
(74) Vertreter: Hilti Aktiengesellschaft Corporate Intellectual Property

(57) **Zusammenfassung**

Eine Handwerkzeugmaschine hat einen Antrieb und ein pneumatisches Schlagwerk. Das Schlagwerk beinhaltet einen auf einer Arbeitsachse beweglichen Schläger, einen durch ein Pleuel (17) an den Antrieb angebundenen Erregerkolben und eine pneumatische Kammer, die eine Bewegung des Schlägers an den Erregerkolben ankoppelt. Das Pleuel (17) ist um eine Schwenkachse (27) schwenkbar in dem Erregerkolben aufgehängt. Ein Dichtring (25) umspannt in einer Ebene eine Mantelfläche des Erregerkolbens. Die Schwenkachse (27) liegt in der Ebene.

## Beschreibung

### GEBIET DER ERFINDUNG

Die vorliegende Erfindung betrifft eine Handwerkzeugmaschine, insbesondere einen Bohrhammer mit einem pneumatischen Schlagwerk.

Wie unter anderem aus der DE 102008054976 A1 bekannt, beinhaltet das Schlagwerk einen Erregerkolben. Der Erregerkolben ist mittels eines Querbolzens und eines Pleuels an ein Exzenterrad oder äquivalenten Drehantrieb gekoppelt. Der Querbolzen fixiert das Pleuel an dessen Auge in dem Erregerkolben. Der Querbolzen wird durch eine radiale Bohrung in der Mantelfläche des Erregerkolbens eingesetzt. Ein Dichtring zum Versiegeln der pneumatischen Kammer des Schlagwerks ist in die Mantelfläche eingesetzt.

Der Dichtring unterliegt einem erheblichen Verschleiß, und muss bei einer Wartung ausgetauscht werden. Die Wartungsintervalle werden unter anderem durch die Dauerbeständigkeit des Dichtrings vorgegeben.

### OFFENBARUNG DER ERFINDUNG

Die erfindungsgemäße Handwerkzeugmaschine hat einen Antrieb und ein pneumatisches Schlagwerk. Das Schlagwerk beinhaltet einen auf einer Arbeitsachse beweglichen Schläger, einen durch ein Pleuel an den Antrieb angebundenen Erregerkolben und eine pneumatische Kammer, die eine Bewegung des Schlägers an den Erregerkolben ankoppelt. Das Pleuel ist um eine Schwenkachse schwenkbar, vorzugsweise mit einem Bolzen, in dem Erregerkolben aufgehängt. Ein Dichtring umspannt in einer Ebene eine Mantelfläche des Erregerkolbens. Die Schwenkachse liegt in der von dem Dichtring definierten Ebene. Der Bolzen und der Dichtring überlappen vorzugsweise vollständig oder teilweise längs der Arbeitsachse oder die Schwenkachse ist zu der Ebene in Schlagrichtung versetzt angeordnet. Die Ebene ist senkrecht zu Arbeitsachse, parallel zu der Stirnseite des Erregerkolbens, und verläuft durch die Mitte des Dichtrings. Die Anordnung der Schwenkachse und des antreibenden Endes des Pleuels auf gegenüberliegenden Seiten des Dichtrings erweist sich als günstig für den Verschleiß.

Der Erregerkolben hat vorzugsweise eine vollständig oder wenigstens in dem Bereich des Bolzens geschlossene Mantelfläche. Die Mantelfläche weist insbesondere keine Bohrungen auf.

Eine Ausgestaltung sieht vor, dass der Bolzen mit einem Drehverschluss in dem Erregerkolben fixiert ist. Der Drehverschluss, insbesondere ein Bajonettverschluss, erweist sich als vorteilhaft, die Schwenkachse innerhalb des Dichtrings anzuordnen.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer
Fig. 2 einen Erregerkolben im Längsschnitt in der Ebene II-II
Fig. 3 den Erregerkolben im Querschnitt in der Ebene III-III
Fig. 4 den Erregerkolben im Längsschnitt in der Ebene IV-IV
Fig. 5 einen Erregerkolben im Längsschnitt in der Ebene V-V
Fig. 6 den Erregerkolben im Querschnitt in der Ebene VI-VI
Fig. 7 den Erregerkolben im Längsschnitt in der Ebene VII-VII
Fig. 8 den Erregerkolben im Längsschnitt in der Ebene VIII-VIII
Fig. 9 einen Erregerkolben im Längsschnitt in der Ebene IX-IX
Fig. 10 den Erregerkolben im Längsschnitt in der Ebene X-X

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

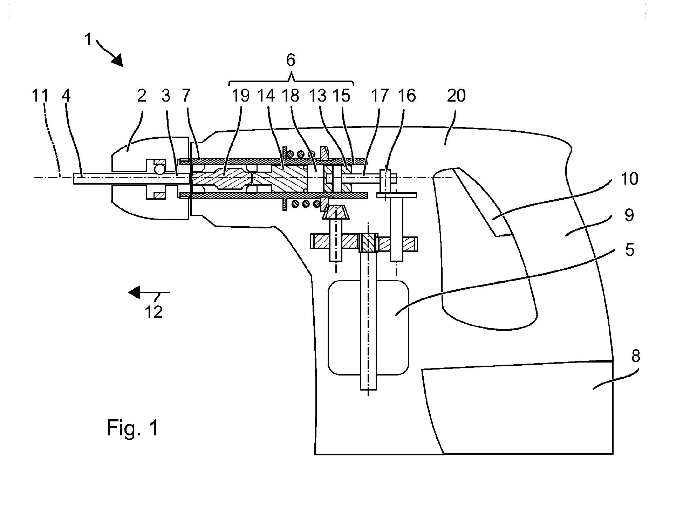

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Ein Anwender kann den Bohrhammer **1** mittels eines Handgriffs **9** führen und mittels eines Systemschalters **10** den Bohrhammer **1** in Betrieb nehmen. Im Betrieb dreht der Bohrhammer **1** den Bohrer **4** kontinuierlich um eine Arbeitsachse **11** und kann dabei den Bohrer **4** in Schiagrichtung **12** längs der Arbeitsachse **11** in einen Untergrund schlagen.

Das Schlagwerk **6** ist ein pneumatisches Schlagwerk **6.** Ein Erregerkolben **13** und ein Schläger **14** sind in einem Führungsrohr **15** in dem Schlagwerk **6** längs der Arbeitsachse **11** beweglich geführt. Der Erregerkolben **13** ist über einen Exzenter **16** an den Motor **5** angekoppelt und zu einer periodischen, linearen Bewegung gezwungen. Ein Pleuel **17** verbindet den Exzenter **16** mit dem Erregerkolben **13.** Eine Luftfeder gebildet durch eine pneumatische Kammer **18** zwischen dem Erregerkolben **13** und dem Schläger **14** koppelt eine Bewegung des Schlägers **14** an die Bewegung des Erregerkolbens **13** an. Der Schläger **14** kann direkt auf ein hinteres Ende des Bohrers **4** aufschlagen oder mittelbar über einen im Wesentlichen ruhenden Zwischenschläger **19** einen Teil seines Impuls auf den Bohrer **4** übertragen. Das Schlagwerk **6** und vorzugsweise die weiteren Antriebskomponenten sind innerhalb eines Maschinengehäuses **20** angeordnet.

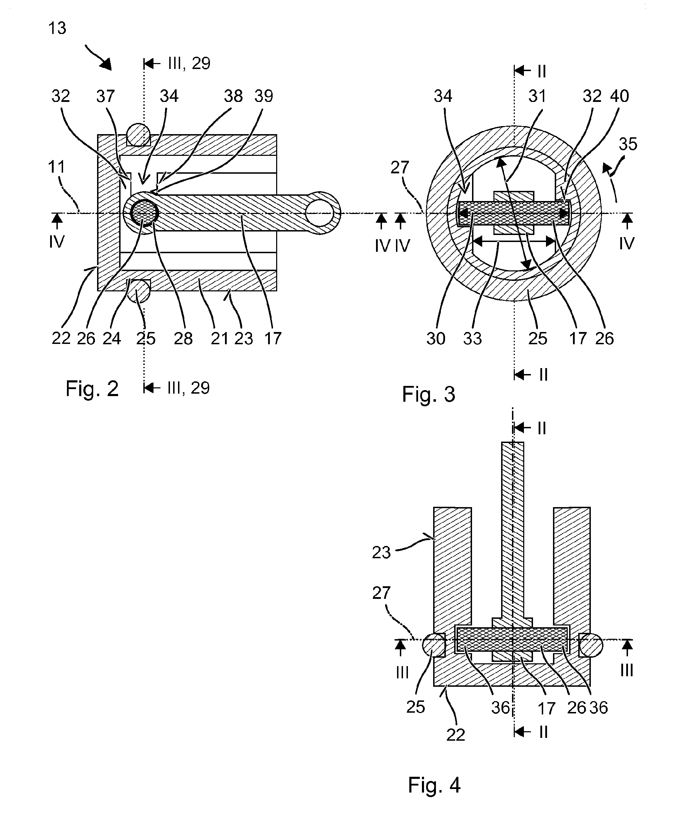

Fig. 2 zeigt den Erregerkolben **13** in einem Längsschnitt in der Ebene II-II; Fig. 3 zeigt den Erregerkolben **13** in einem Querschnitt in der Ebene III-III; Fig. 4 einen Längsschnitt in der Ebene IV-IV. Der Erregerkolben **13** hat einen hohlzylindrischen Grundkörper **21,** der an einer Stirnseite **22** geschlossen ist. Die Stirnseite **22** weist in Richtung zu dem Schläger **14** und komprimiert bzw. dekomprimiert die Luftfeder in der pneumatischen Kammer **18.** Eine Mantelfläche **23** des Grundkörpers **21** gleitet an der Innenwand des Führungsrohrs **15** entlang. Eine ringförmige Nut **24** ist in die Mantelfläche **23** nahe der Stirnseite **22** eingelassen. Ein Dichtring **25** ist in die Nut **24** eingesetzt. Der Dichtring **25** berührt das Führungsrohr **15** und sorgt für einen luftdichten Verschluss der pneumatischen Kammer **18.**

Das Pleuel **17** ist an einem Bolzen **26** in dem Erregerkolben **13** aufgehängt. Der beispielsweise zylindrische Bolzen **26** definiert eine Schwenkachse **27,** um welche das Pleuel **17** schwenken kann. Das Pleuel **17** hat ein Auge **28,** in welches der Bolzen **26** eingesetzt ist. Das Pleuel **17** steht im Wesentlichen radial von dem Bolzen **26** ab. Der Bolzen **26** ist senkrecht zu der Achse **11** in dem Erregerkolben **13** befestigt.

Die Schwenkachse **27** des Bolzens **26** liegt mit dem Dichtring **25** in einer Ebene **29.** Die Schwenkachse **27** verläuft somit durch den Dichtring **25.** Das Auge **28** des Pleuel **17** ist nahe oder am Schwerpunkt des Dichtrings **25.** Der Versatz, längs der Achse **11,** des Schwenkachse **27** zu dem Schwerpunkt ist geringer als die halbe Breite, Abmessung längs der Achse **11,** des Dichtrings **25.** Zwischen dem Pleuel **17** und dem Dichtring **25** wirkende Drehmomente können hierdurch vorteilhaft für die Dichteigenschaft und die Dauerbelastung des Dichtrings minimiert werden.

Der Bolzen **26** liegt vollständig innerhalb des Erregerkolbens **13** und der Erregerkolben **13** hat im Bereich des Bolzens **26** eine vollständig geschlossene Mantelfläche **23.** Die Befestigung des Bolzens **26** in dem Erregerkolben **13** erfolgt durch einen Drehverschluss, beispielsweise einem Bajonettverschluss. Der Bolzen **26** kann in einer Winkelorientierung in den hohlzylindrischen Grundkörper **21** eingesetzt werden. Eine Länge **30** des Bolzens **26** ist geringer als die radiale Innenabmessung **31** des Grundkörpers **21** bei dieser ersten Winkelorientierung. Der Grundkörper **21** hat einen radial vorstehenden Steg **32,** welcher in einer anderen, zweiten Winkelorientierung die Innenabmessung **33** auf ein geringeres Maß als die Länge **30** des Bolzens **26** verringert. Der Steg **32** ist auf der axialen Höhe des Dichtrings **25** mit einer Nut **34** versehen, die parallel zu der Umfangsrichtung **35** verläuft. Die Breite, Abmessung längs der Achse **11,** der Nut **34** ist etwa gleich dem Durchmesser des Bolzens **26.** Der Bolzen **26** kann in die zweite Winkelorientierung gedreht werden, wobei seine das Auge **28** überragenden Enden **36** in die Nut **34** eingeführt werden. Die senkrecht zu der Achse **11** verlaufenden Flanken **37, 38** der Nut **34** klemmen den Bolzen **26** ein. Die Nut **34** kann mit einem Widerhaken **39** versehen sein, welcher ein Rückdrehen des Bolzens **26** in die erste Winkelorientierung hemmt. Vorzugsweise ist die Nut **34** in einer Umfangsrichtung **35** durch eine zur Achse **11** parallel laufende Flanke **40** geschlossen, wodurch ein Drehen über die zweite Winkelorientierung hinaus gehemmt ist.

Bei der Montage wird das Pleuel **17** zuerst mit seinem Auge **28** auf dem Bolzen **26** vormontiert, bevor der Bolzen **26** in den Erregerkolben **13** eingeschoben und durch verdrehen gesichert wird.

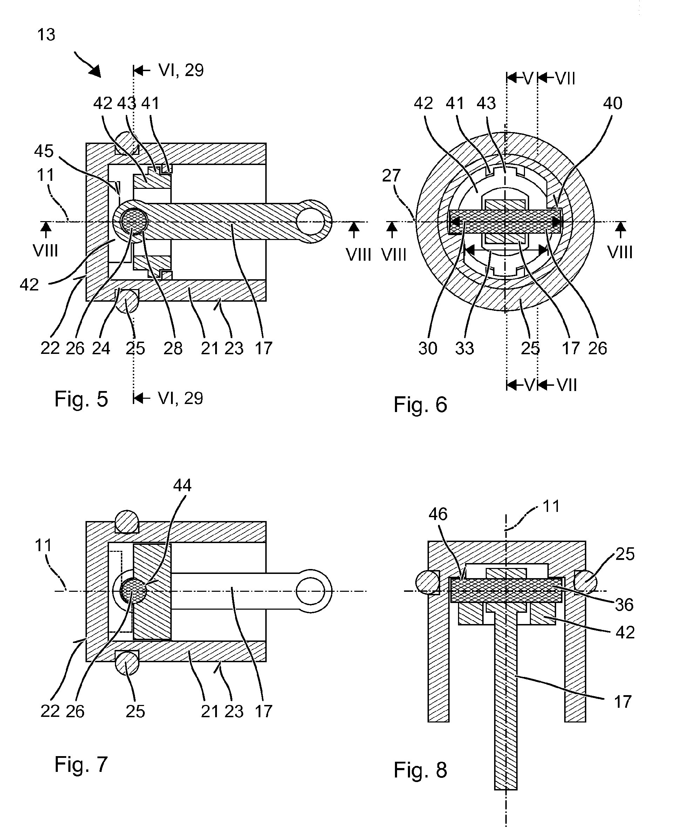

Fig. 5 bis Fig. 7 zeigen eine Abwandlung des Erregerkolbens **13.** Der Erregerkolben **13** hat einen hohlzylindrischen Grundkörper **21,** der an einer Stirnseite **22** geschlossen ist. Der Dichtring **25** umspannt die geschlossene Mantelfläche **23** des Grundkörpers **21** Der zylindrische Bolzen **26** definiert die Schwenkachse **27,** um welche das Pleuel **17** schwenkbar aufgehängt ist. Die Schwenkachse **27** liegt mit dem Dichtring **25** in einer Ebene **29.**

Der Bolzen **26** ist mit einem Drehverschluss in dem Erregerkolben **13** befestigt. Der Bolzen **26** ist zwischen der Stirnseite **22** des Erregerkolbens **13** und zwei radial nach Innen vorstehenden Stegen **41** eingespannt. Ein Teller **42** überbrückt den axialen Abstand zwischen den Stegen **41** und dem Bolzen **26.** Der Teller **42** hat zwei radial vorstehende Finger **43,** welche an den zwei radial nach Innen vorstehende Stege **41** des Grundkörpers **21** anliegen. Der Teller **42** hat eine halbzylindrische Aussparung **44,** welche an dem Bolzen **26** anliegt. Der Bolzen **26** liegt ferner an einer zur Achse **11** senkrechten, ringförmigen Flanke **45** an der Stirnseite **22** an. Anschläge **46** mit einer in Umfangsrichtung **35** weisenden Flanke **40** stehen längs der Achse **11** von der Flanke **45** vor.

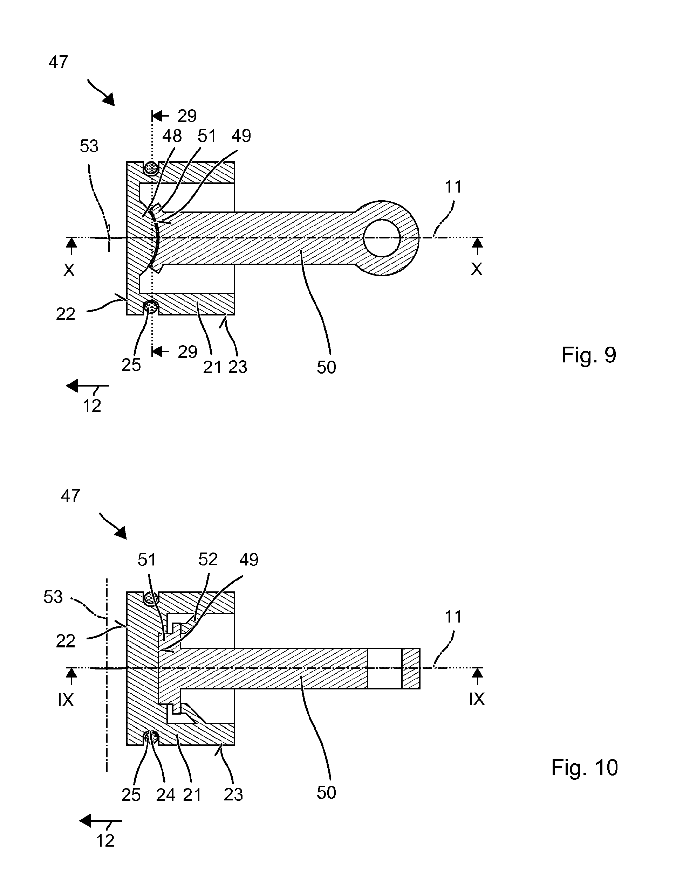

Fig. 9 und 10 zeigen einen weiteren Erregerkolben **47.** Der Erregerkolben **47** ist an ein Pleuel **17** angebunden. Der Erregerkolben **47** hat an seiner der Stirnseite **22** gegenüberliegenden Innenseite eine Erhebung **48.** Die Erhebung **48** hat die Form eines Zylindersegments. Die Oberfläche **49** der Erhebung **48** hat einen konstanten Krümmungsradius. Der Krümmungsradius ist vorzugsweise größer als der Abstand der Erhebung zu der Stirnseite **22.** Entsprechend liegt die Achse **53** in Schlagrichtung **12** versetzt, außerhalb des Erregerkolbens **13.** Die Oberfläche **49** liegt vorzugsweise innerhalb des Dichtrings **25,** d.h. der Dichtring **25** und die Oberfläche **49** überlappen längs der Arbeitsachse **11.** Die von dem Dichtring **25** definierte Ebene **29** schneidet vorzugsweise die konvexe Oberfläche **49.** Das Pleuel **50** hat ein zu einer Schale **51** geformtes Ende. Die Schale **51** hat eine konvexe Oberfläche, deren Krümmungsradius gleich dem der Erhebung **48** ist. Die Schale **51** liegt auf der Erhebung **48** auf und kann um die Achse **53** geschwenkt an der Erhebung **48** gleiten. Die Schale **51** leitet Schubkräfte längs der Schlagrichtung **12** in den Erregerkolben **47** ein.

Die Schale **51** ist mittels einer Rastverbindung in dem Erregerkolben **47** gehalten. Die Rastverbindung beinhaltet beispielsweise zwei oder mehr schwenkbare Zungen **52,** die radial in den Innenraum des Erregerkolbens **13** vorstehen. Die Zungen **52** liegen beim montierten Pleuel **50** an einer entgegen der Schlagrichtung **12** weisenden Seite der Schale **51** an.

## Patentansprüche

1. Handwerkzeugmaschine mit
einem Antrieb (5),
einem pneumatischen Schlagwerk (6), das einen auf einer Arbeitsachse (11) beweglichen Schläger (14), einen in Schlagrichtung (12) vor dem Schläger (14) angeordneten, durch ein Pleuel (17, 50) an den Antrieb (5) angebundenen Erregerkolben (13; 47) und eine pneumatische Kammer (18), die eine Bewegung des Schlägers (14) an den Erregerkolben (13; 47) ankoppelt, aufweist, wobei das Pleuel (17) um eine Schwenkachse (27; 53) schwenkbar in dem Erregerkolben (13; 47) aufgehängt ist,
einem Dichtring (25), der in einer Ebene (300) liegend eine Mantelfläche (23) des Erregerkolbens (13) umspannt,
**dadurch gekennzeichnet, dass** die Schwenkachse (27; 53) in der Ebene (300) oder die Schwenkachse (27) parallel zu der Ebene (300) in Schlagrichtung (12) versetzt ist.

2. Handwerkzeugmaschine nach Anspruch 1, **dadurch gekennzeichnet, dass** das Pleuel (17) an einem Bolzen (26) in dem Erregerkolben (13) aufgehängt ist und eine Achse des Bolzens (26) die Schwenkachse (27) definiert.

3. Handwerkzeugmaschine nach Anspruch 2, **dadurch gekennzeichnet, dass** der Erregerkolben (13) eine vollständig oder wenigstens in dem Bereich des Bolzens (26) geschlossene Mantelfläche (23) aufweist.

4. Handwerkzeugmaschine nach Anspruch 2 oder 3, **dadurch gekennzeichnet, dass** der Bolzen (26) mit einem Drehverschluss in dem Erregerkolben (13) fixiert ist.

5. Handwerkzeugmaschine nach Anspruch 4, **dadurch gekennzeichnet, dass** der Bolzen (26) in ein Auge (28) des Pleuels (17) eingesetzt ist, der Bolzen (26) innerhalb des Erregerkolbens (13) um die Arbeitsachse (11) zwischen zwei Winkelstellungen drehbar ist und die beidseitig das Auge (28) überragenden Enden (36) des Bolzens (26) in einer ersten der Winkelstellungen längs der Arbeitsachse (11) verschiebbar und in einer zweiten der Winkelstellungen längs der Arbeitsachse (11) gehemmt ist.

6. Handwerkzeugmaschine nach Anspruch 5, **dadurch gekennzeichnet, dass** der Erregerkolben (13) einen hohlzylindrischen Grundkörper (21) mit einer ersten radial vorstehenden, gegenüber der Arbeitsachse (11) geneigten Flanke (37) und einer zweiten radial vorstehenden, gegenüber der Arbeitsachse (11) geneigten Flanke (38) aufweist, und eines der Enden (36) zwischen der ersten Flanke (37) und der zweiten Flanke (38) eingespannt ist.

7. Handwerkzeugmaschine nach Anspruch 1, **dadurch gekennzeichnet, dass** das Pleuel (50) eine Schale (51) aufweist, die an einer zylindrischen Erhebung (48) in dem Erregerkolben (47) anliegt.

8. Handwerkzeugmaschine nach Anspruch 7, **dadurch gekennzeichnet, dass** eine Achse (53) der zylindrischen Erhebung (48), welche die Schwenkachse (53) des Pleuel (50) definiert, vor einer Stirnseite (22) des Erregerkolbens (47) liegt.
